Europäisches Patentamt

European Patent Office

Office européen des brevets

(11) Veröffentlichungsnummer: **0 155 249**
**B1**

# (12) EUROPÄISCHE PATENTSCHRIFT

(45) Veröffentlichungstag der Patentschrift:
31.05.89

(21) Anmeldenummer: **85850060.6**

(22) Anmeldetag: **25.02.85**

(51) Int. Cl.⁴: **B 23 K 9/02**, B 23 K 37/02

(54) **Einrichtung für die Innenschweissung von Rohrverzweigungen.**

(30) Priorität: **24.02.84 SE 8401018**

(43) Veröffentlichungstag der Anmeldung:
**18.09.85 Patentblatt 85/38**

(45) Bekanntmachung des Hinweises auf die Patenterteilung:
**31.05.89 Patentblatt 89/22**

(84) Benannte Vertragsstaaten:
**CH DE FR GB IT LI**

(56) Entgegenhaltungen:
**GB-A-1 416 853**
**GB-A-1 547 815**
**JP-A-57 127 579**
**US-A-4 104 499**

**PATENT ABSTRACTS OF JAPAN, Band 6, Nr. 224, 9.**
**November 1982, Seite (M-170)(1102)**

(73) Patentinhaber: **ESAB Aktiebolag, Box 8004**
**Herkulesgatan 72, S-402 77 Göteborg (SE)**

(72) Erfinder: **Yttergren, Sune, Vekhyttan, S-716 00**
**Fjugesta (SE)**
Erfinder: **Jansson, Uno, Lindasvägen 3, S-695 00**
**Laxa (SE)**
Erfinder: **Strand, Urban, Änggatan 10, S-690 30**
**Finnerödja (SE)**
Erfinder: **Knipström, Karl-Erik, Lingonstigen 5,**
**S-695 00 Laxa (SE)**

(74) Vertreter: **Frisch, Kurt, c/o ESAB AB Box 8004,**
**S-402 77 Göteborg (SE)**

EP 0 155 249 B1

## Beschreibung

Die Erfindung betrifft eine Einrichtung für die Innenschweißung eines Eckstoßes einer Rohrverzweigung zwischen einem ersten, geraden Rohr und einem zweiten Rohr, wobei der Querschnitt des ersten Rohres kleiner als der Querschnitt des zweiten Rohres ist, mit einem in das erste Rohr einführbaren von einem Betätigungsglied axial verschiebbaren Mundstückträger, der an seinem vorderen, in das Rohr einschiebbaren Ende Gasmundstück mit einer schwerschmelzbaren Stabelektrode trägt, die mit der Achse des ersten Rohres einen spitzen Winkel bildet, und der mit einem Halter eines am ersten Rohr befestigbaren Ständers verbunden ist, wobei der Halter samt dem Mundstückträger mittels einer Antriebsvorrichtung um die Achse des ersten Rohres im Ständer drehbar angebracht ist.

Eine Einrichtung dieser Gattung ist durch die US-A-4 104 499 bekannt geworden, gemäß der eine Elektrode um die Achse des ersten Rohres drehbar angebracht ist. Beim Schweißen von Rohrabzweigungen muß die Elektrode zusätzlich zur Kreisbewegung auch eine axiale Bewegung bezüglich des ersten Rohres ausführen um der Schnittlinie der beiden Rohre, die dem Verlauf des Schweißfuge entspricht, folgen zu können. In det genannten Veröffentlichung wird diese axiale Bewegung mit Hilfe einer Kammführung erreicht. Die Kammführung muß dabei jeweils an die Rohrdimensionen angepaßt werden. Bei der Umstellung auf andere Dimensionen geht Produktionszeit verloren. Die Kammführungen sind wegen ihrer komplizierten geometrischen Form teurere Zubehörteile des Gerätes und müssen bei universeller Verwendung dieser Einrichtung in großer Anzahl für die verschiedenen Rohrdimensionskombinationen zur Verfügung stehen, was die Produktionsnebenkosten erhöht

Durch die JP-A-57-127 579 ist eine Einrichtung für die Außenschweißung einer Rohrverzweigung mit abschmelzender Elektrode bekannt geworden Zur Führung des Schweißbrenners langs der Verschneidungskurve werden mechanische Sensoren für die Lagebestimmung verwendet. Insbesondere wird die Höheneinstellung des Brenners durch einen Sensor bestimmt, der, um 180° versetzt, die bezüglich des Schweißbrenners diametrale Stelle der Rohrverschneidung abtastet. Dadurch läßt sich diese Einrichtung nur für rechtwinkelige Rohrverzweigungen mit sich schneidenden Rohrachsen anwenden. Die Sensoren können außerdem wegen der Schweißwärme nicht in der Nähe der Schweißstelle angebracht werden, weshalb eine Messung der tatsächlichen Position des Schweißbrenners gegenüber der Verschneidungslinie nicht möglich ist.

Die vorliegende Erfindung hat sich zur Aufgabe gestellt eine Einrichtung der genannten Gattung zu schaffen, die ohne Umstellung für verschiedene Rohrdimensionen und verschiedene Verzweigungswinkel der beiden Rohre verwendet werden kann.

Zur Lösung dieser Aufgabe wird gemäß der Erfindung vorgeschlagen, daß die Position der Spitze der Elektrode bezüglich der durch das erste Rohr definierten inneren respektive äußeren Zylinderfläche in radialer Richtung durch einen am Mundstückträger angebrachten gegen die Wand des ersten Rohrs anpreßbaren Sensor mechanisch fest einstellbar ist und für die Einstellung der Position der Spitze der Elektrode in axialer Richtung Mittel für die Erzeugung eines ersten elektrischen Signals, das dem tatsächlichen bezüglich des ersten Rohres axialen Abstand zwischen der Spitze der Elektrode und der Schweißstelle am Eckstoß entspricht, und Mittel für die Erzeugung eines zweiten elektrischen Signals, das einem vorgegebenen Abstand entspricht, vorgesehen sind, wobei die Signale einem Komparator zugeführt sind, der zur Angabe eines der Signaldifferenz entsprechenden Fehlersignals dient, das dem Betätigungsglied zur Aktivierung zugeführt ist, um die Elektrode bezüglich des ersten Rohres zur Verringerung des Fehlersignals axial zu verschieben.

Eine Voraussetzung für eine einwandfreie Schweißqualität ist die Aufrechterhaltung einer konstanten Lichtbogenlänge zwischen Elektrode und Schweißfuge. Dies wird gemäß der Erfindung dadurch erreicht, daß der radiale Abstand zwischen Elektrode und Schweißfuge durch die feste Verbindung von dem am Rohr anliegenden Sensor und der Elektrode festliegt, während der axiale Abstand durch die Überwachung eines abstandsabhängigen Signals mit Hilfe des Betätigungsgliedes auf einen vorbestimmten Wert eingeregelt wird. Der Gesamtabstand setzt sich aus diesen beiden Abstandskomponenten zusammen.

Gemäß der Erfindung ist es vorteilhaft, daß der Sensor gegen eine Erzeugende des ersten Rohres anpreßbar ist, die durch die Schweißstelle geht. Es ist damit zu rechnen, daß die Rohre nicht exakt kreiszylindrisch sein werden, sondern herstellungsbedingte Abweichungen von dieser Form aufweisen. Durch das Anpressen des Sensors an eine Erzeugende, die durch die Schweißstelle geht, wird erreicht, daß der axiale Abstand der mit dem Sensor verbundenen Elektrode von der Schweißstelle stets gleich groß bleibt, und zwar im wesentlichen unabhängig von der tatsächlichen Rohrquerschnittsform. Vorzugsweise ist der Sensor an die Innenwand des ersten Rohres anpreßbar.

Außerdem ist es gemäß der Erfindung vorteilhaft, daß der radiale Abstand zwischen der Achse des ersten Rohres und der Spitze der Stabelektrode zumindest gleich groß wie der Abstand zwischen der genannten Achse und dem Anliegepunkt des Sensors oder um höchstens das Ausmaß der Wanddicke des ersten Rohres größer als der letztgenannte Abstand ist. Ist der genannte, radiale Abstand geringer, kann es vorkommen, daß der Fußpunkt des Lichtbogens längs der Innenwand des ersten Rohres in Richtung zur anderen Rohröffnung zu wandern beginnt. Ist der radiale Abstand nur etwas größer als der angegebene Grenzwert, ist die Schweißqualität infolge möglicher Einbrandfehler in einem der beiden zur verschweißenden Rohre nicht mehr einwandfrei kontrollierbar. Solange der radiale Abstand innerhalb der genannten Grenzwerte liegt, ist zudem erfahrungsgemäß eine Nachbearbeitung der Schweißnaht nicht erforderlich. Eine derartige Nachbearbeitung wäre insbesondere bei Rohren mit kleinerem Durchmesser - etwa kleiner als 40 mm - wegen der schlechten Zugänglichkeit umständlich. Außerdem ist eine visuelle Kontrolle des Arbeitsvorganges während der Nachbearbeitung kaum möglich.

Weitere Vorteile der Erfindung gehen aus der folgenden Beschreibung im Zusammenhang mit der beigefügten Zeichnung hervor, die ein Ausführungsbeispiel der Erfindung zeigt.

Fig. 1 zeigt ein Rohrschweißwerkzeug in Richtung eines Rohres, das an ein anderes Rohr geschweißt werden soll.

Fig. 2 ist eine Seitenansicht des Werkzeuges in Richtung des Pfeiles I in Fig. 1.

Fig. 3 zeigt etwas schematisch die Lage der Schweißelektrode beim Schweißen einer Verzweigung von zwei Rohren, deren Achsen einen spitzen Winkel bilden.

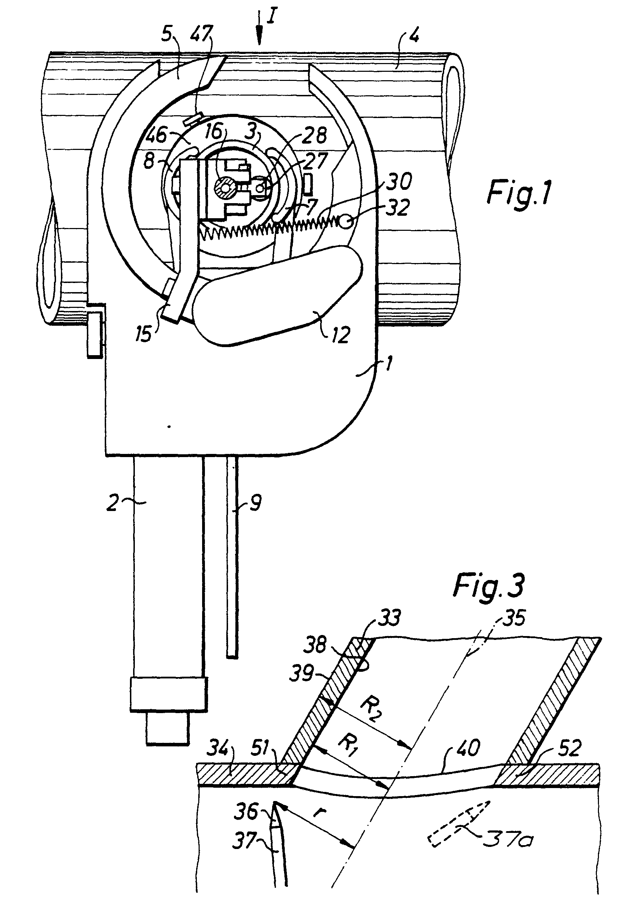

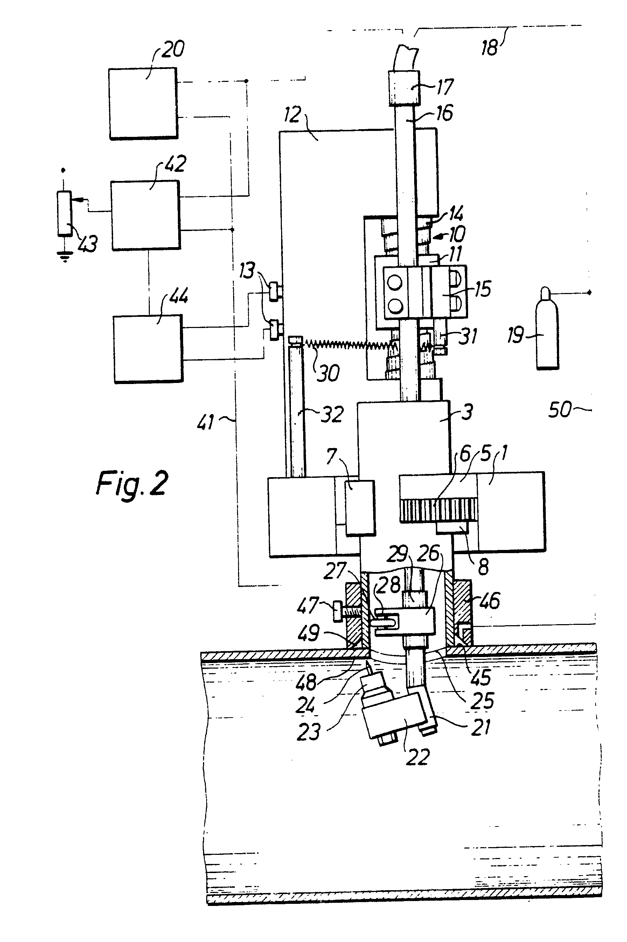

Das Rohrschweißwerkzeug besitzt einen U-förmigen Ständer 1 mit einem Handgriff 2. Das Werkzeug ist mit der U-förmigen Öffnung über ein gerades Anschlußrohr 3 geführt, das mit einem Rohr 4 verschweißt werden soll. Im Ständer 1 ist ein U-förmiger Halter 5 drehbar gelagert. Wenn sich dieser Halter in seiner Ruhelage befindet koinzidieren die Öffnungen des Ständers 1 und des Halters 5. Die Darstellung in Fig. 1 und 2 zeigt den Halter etwas aus der Ruhelage gedreht. Der Halter wird mit Hilfe eines im Handgriff 2 angebrachten Motors und über ein im Ständer angeordnetes hier nicht dargestelltes Getriebe um die Achse des Anschlußrohres 3 gedreht. Ein Teil eines mit dem Getriebe zusammenwirkenden Zahnkranzes des Halters ist jedoch in Fig. 2 gezeigt. Der Ständer 1 ist außerdem mit einem Einspannmechanismus für zwei am Anschlußrohr 3 anliegende Spannbacken 7, 8 versehen. Die Spannbacken werden mittels eines an den Mechanismus angeschlossenen Betätigungsarmes 9 an das Anschlußrohr 3 gepreßt. Ein Einspannmechanismus dieser Art ist beispielsweise in GB-1 416 853 beschrieben

Am drehbaren Halter 5 ist eine Schraubenspindel 10 mit einem Gleitschuh 11 und mit einem in einem Gehäuse eingebauten Antriebsmotor mit Anschlußklemmen 13 versehen. Die hier nicht dargestellte Spindel ist mit einer Teleskopfeder 14 vor Verschmutzung geschützt.

Am Gleitschuh 11, der um die Achse der Spindel schwenkbar ist, ist ein Arm 15 befestigt, der an seinem Ende einen rohrförmigen Mundstückträger 16 hält, der parallel zur Achse der Spindel und des Anschlußrohres angebracht ist. Der Mundstückträger besteht aus einem Kupferrohr und ist an einem Ende mit einem Nippel 17 versehen, an den eine Gasleitung 18 angeschlossen ist, die auch einen Leiter für den Strom umschließt. Die Gasleitung 18 ist mit einem Schutzgasbehälter 19 verbunden, während der Stromleiter an eine Schweißstromquelle 20 angeschlossen ist. Diese Leitungen sind hier nur schematisch gezeigt.

Der Mundstückträger 16 ist an seinem anderen Ende etwas gebogen und an das gebogene Rohrende 21 ist ein Verbindungsstück 22 für ein Gasmundstück 23 mit einer schwerschmelzenden Stabelektrode 24 angelötet. Die Spitze der Elektrode ist gegen den aus Anschlußrohr 3 und Rohr 4 gebildeten Eckstoß 25 gerichtet. Auf dem geraden Teil des Mundstückträgers 16 der in das Anschlußrohr 3 eingeschoben ist, ist ein Rollenträger 26 für eine Rolle 27 montiert, die um eine mit dem Anschlußrohr 3 parallele Achse 28 drehbar ist. Der Rollenträger 26 ist mittels einer Isolierhülse 29 vom Mundstückträger 16 isoliert. Eine Zugfeder 30 ist zwischen einem Stift 31 des Armes 15 und einem Stift 32 des Halters 5 eingespannt. Die Zugfeder 30 ist bestrebt den Arm 15 mit dem Mundstückträger 16 im Uhrzeigersinn (Fig. 1) um die Achse der Schraubenspindel 10 zu drehen und dadurch die Rolle 27 an die Innenwand des Anschlußrohres 3 zu pressen. Die Rolle 27 und die Elektrode 24 sind durch den Rollenträger 26, den Mundstückträger 16, das Verbindungsstück 22 und das Gasmundstück 24 fest verbunden. Die Elektrode ist im Gasmundstück 23 derart montiert, daß ihre Achse jene Erzeugende des Anschlußrohres 3 schneidet, gegen die auch die Rolle 27 anliegt. Die Achse der Elektrode 24, der Rolle 27 und des Mundstückträgers 16 liegen in der gleichen Ebene. Der radiale Abstand der Elektrode vom Anschlußrohr bzw. dessen gedachte Verlängerung im Innen des Rohres 4 ist damit eindeutig festgelegt und unabhängig von der Querschnitts form des Anschlußrohres, die häufig etwas elliptisch ist.

In Fig. 3 wird etwas schematisch der radiale Abstand dargestellt in dem die Elektrodespitze anzubringen ist, um ein einwandfreies Schweißresultat zu erhalten. Ein Anschlußrohr 33 bildet mit einem Rohr 34 einen spitzen Winkel. Die Achse 35 des Anschlußrohres 33 ist strichpunktiert dargestellt Die Spitze 36 der hier nur angedeuteten Elektrode 37 befindet sich in einem radialen Abstand $r$ von der Achse 35, wobei $R_2 \geqslant r \geqslant R_1$ gilt und $R_1$ der radiale Abstand zwischen der Achse 35 und der Innenwand 38 des Anschlußrohres 33 und $R_2$ der radiale Abstand zwischen der Achse 35 und der Außenwand des Anschlußrohres ist. Die Dimensionierungsregel setzt folglich voraus, daß sich die Elektrodenspitze immer in einem vom Rohre 34 umschlossenen Bereich befinden muß. Der dem Anschlußrohr gegenüber offene Winkel zwischen der Elektrode 37 und der Achse 35 ist spitz und vorzugsweise kleiner als 60°. In bestimmten Fällen kann es zweckmäßig sein, daß dieser Winkel 0° beträgt, d. h. daß die Achse der Elektrode mit der Achse des Mundstückträgers parallel ist. Der bezüglich des Anschlußrohres 33 axiale Abstand zwischen der Elektrodenspitze 36 und der Schweißstelle 51 des Eckstoßes 40 wird mit einer Regeleinrichtung eingestellt, wie sie nun unter Hinweis auf das in Fig. 1 und Fig. 2 gezeigte Rohrschweißwerkzeug erklärt wird.

Die Schweißstromquelle 20 ist teils durch den Mundstückträger 16 an die Elektrode 24 und teils mit dem Rückleiter 41 in der Nähe der Schweißstelle an das Rohr 4 angeschlossen. Die Spannung zwischen der Elektrode und dem Rohr wird einem Komparator 42 zugeführt, in dem diese mit einer an einem Potentiometer 43 einstellbaren und abgreifbaren Spannung verglichen wird. Die eingestellte Spannung entspricht einem gewissen Abstand zwischen der Elektrode 24 und dem Eckstoß 25. Das der Spannungsdifferenz entsprechende Fehlersignal wird an die Stromquelle 44 gelegt, die an die Anschlußklemmen 13 des Antriebsmotors für die Schraubenspindel argeschlossen ist. Der Antriebsmotor bleibt eingeschaltet, solange das Fehlersignal vorliegt, und verschiebt den Gleitschuh 11 auf der Spindel um das Fehlersignal zu verringern. Der Gesamtabstand zwischen Elektrode und Schweißstelle setzt sich aus dem festgeleten radialen Abstand und dem veränderbaren axialen Abstand zusammen, der solange verändert wird, bis die Spannung zwischen der Elektrode und der Schweißstelle einen bestimmten Wert erreicht.

Insbesondere beim Schweißen dünnwandiger Rohre kann es zweckmäßig sein, die außen liegende Wurzelseite vor Oxydation durch die umgebende Luft zu schützen. Eine Schutzgasmuffe 46 ist mit Gleitpassung auf das Anschlußrohr 3 aufgeschoben und mit diesem mittels Spannschrauben 47 verspannt. Die zum Rohr 4 gerichtete Vorderseite der Schutzgasmuffe 46 ist an die zylindrische Form des Rohres 4 angepaßt und liegt auf diesem dicht an. Die der Wurzelseite zugewandte Kante der Muffe 36 ist abgeschrägt und bildet mit dem Anschlußrohr 3 und dem Rohr 4 eine ringförmige Kammer 49. Diese Kammer ist durch eine Leitung 50 an den Schutzgasbehälter angeschlossen und das unter Druck stehende Schutzgas schützt die Wurzelseite vor dem Zutritt der umgebenden Luft.

Bevor das Schweißwerkzeug angebracht wird, sind die beiden Rohre 3, 4 durch Heftschweißung verbunden worden. Danach wird die Muffe 46 auf das Anschlußrohr 3 geschoben und mit den Spannschrauben festgespannt. Das Schweißwerkzeug wird nun aufgesetzt, wobei der Mundstückträger 16 etwas zum Rohrzentrum geschwenkt wird um das Einführen des Gasmundstückes 23 durch das Anschlußrohr 3 zu ermöglichen Wenn der Mundstückträger 16 so weit ins Rohr eingeführt ist, daß der axiale Abstand der Elektrode vom Eckstoß annähernd richtig ist, wird das Schweißwerkzeug mit den Spannbacken 7, 8 am Anschlußrohr festgespannt und der Mundstückträger 16 freigegeben. Die Rolle 27 wird durch die Feder 30 an die Innenwand des Anschlußrohres gepreßt und der radiale Abstand der Elektrode ist damit festgelegt. Dieser radiale Abstand kann eingestellt werden, beispielsweise durch Verschieben der Elektrode im Gasmundstück. Es ist auch denkbar die Rolle 27 gegen eine Rolle mit anderem Durchmesser auszutauschen. Sobald der Lichtbogen gezündet hat und der Abstand zwischen der Elektrode und der Schweißfuge auf den gewünschten Wert eingeregelt ist wird die Drehung der Elektrode im Rohr eingeleitet.

Es ist denkbar den Elektrodenabstand und andere Schweißparameter, z. B. Schweißspannung, Schweißstrom, gemäß einem bestimmten Programm In Abhängigkeit von der Lage der Elektrode während ihrer Rotation um die Rohrachse zu ändern. Diese Regelung ist besonders zweckmäßig bei der Innenschweißung von Rohren, die miteinander eine Winkel bilden, der wesentlich von 90° abweicht, da sich bei einer derartigen Rohrverzweigung die Schweißbedingungen wegen der wechselnden Form der Schweißfuge stark ändern. In Fig. 3 ist eine Rohrverzweigung dargestellt, bei der die beiden Rohrachsen einen Winkel von 60° bilden. Die Schweißung des Eckstoßes bei der Schweißstelle 51, wo die beiden Rohrwände einen stumpfen Winkel bilden erfolgt zweckmäßig mit anderen Schweißparametern, als die Schweißung der diametral gegenüberliegenden Schweißstelle, wo die beiden Rohrwände sich in einem spitzen Winkel treffen und die Elektrode 37a eine andere Winkelposition gegenüber der Schweißstelle 52 einnimmt als gegenüber der Schweißstelle 51. Die Änderung der Schweißparameter während der Drehung der Elektrode kann kontinuierlich erfolgen. Es ist aber auch möglich die Schweißparameter auf gewissen Abschnitte längs der Kreisbahn der Elektrode unverändert beizubehalten und beim Übergang auf den nächsten Abschnitt sprunghaft zu ändern, soferne diese Änderungen sich in mäßigen Grenzen halten.

**Patentansprüche**

1. Einrichtung für die Innenschweißung eines Eckstoßes (25) einer Rohrverzweigung zwischen einem ersten, geraden Rohr (3) und einem zweiten Rohr, (5) wobei der Querschnitt des ersten Rohres (3) kleiner als der Querschnitt des zweiten Rohres (5) ist, mit einem in das erste Rohr einführbaren von einem Betätigungsglied (10, 11) axial verschiebbaren Mundstückträger (16), der an seinem vorderen, in das zweite Rohr einschiebbaren Ende ein Gasmundstück (23) mit einer schwerschmelzbaren Stabelektrode (24) trägt, die mit der Achse des ersten Rohres einen spitzen Winkel bildet, und der mit einem Halter (5) eines am ersten Rohr befestigbaren Ständers (1) verbunden ist, wobei der Halter samt dem Mundstückträger mittels einer Antriebsvorrichtung um die Achse des ersten Rohres (3) im Ständer drehbar angebracht ist, dadurch gekennzeichnet, daß die Position der Spitze der Elektrode (24) bezüglich der durch das erste Rohr (3) definierten inneren respektive äußeren Zylinderfläche in radialer Richtung durch einen am Mundstückträger (16) angebrachten gegen die Wand des ersten Rohrs anpreßbaren Sensor (27) mechanisch fest einstellbar ist und für die Einstellung der Position der Spitze der Elektrode (24) in axialer Richtung Mittel (20) für die Erzeugung eines ersten elektrischen Signals, das dem tatsächlichen bezüglich des ersten Rohres axialen Abstand zwischen der Spitze der Elektrode (24) und der Schweißstelle am Eckstoß (25) entspricht, und Mittel (43) für die Erzeugung eines zweiten elektrischen Signals, das einem vorgegebenen Abstand entspricht, vorgesehen sind, wobei die Signale einem Komparator (42) zugeführt sind, der zur Abgabe eines der Signaldifferenz entsprechenden Fehlersignals dient, das dem Betätigungsglied (10, 11) zur Aktivierung zugeführt ist, um die Elektrode (24) bezüglich des ersten Rohres zur Verringerung des Fehlersignals axial zu verschieben.

2. Einrichtung gemäß Patentanspruch 1, dadurch gekennzeichnet, daß der Sensor (27) gegen eine Erzeugende des ersten Rohres (3) anpreßbar ist, die durch die Schweißstelle geht.

3. Einrichtung gemäß Patentanspruch 2, dadurch gekennzeichnet, daß der Sensor (27) an die Innenwand des ersten Rohres (3) anpreßbar ist.

4. Einrichtung nach Patentanspruch 3, dadurch gekennzeichnet, daß der radiale Abstand zwischen der Achse der ersten Rohres und der Spitze der Stabelektrode (24) zumindest gleich groß wie der Abstand zwischen der genannten Achse und dem Anliegepunkt des Sensors (27) oder um höchstens das Ausmaß der Wanddicke des ersten Rohres größer als der letztgenannte Abstand ist.

5. Einrichtung nach einem der Patentansprüche 1 bis 4, dadurch gekennzeichnet, daß das erste Signal der tatsächlichen Lichtbogenspannung zwischen der Elektrode (24) und der Schweißstelle und das zweite Signal einer vorgegebenen Lichtbogenspannung entspricht.

6. Einrichtung nach einem der Patentansprüche 1 bis 5, dadurch gekennzeichnet, daß der Sensor (27) mittels eines nachgebenden, zwischen Sensor (27) und Halter (5) eingeschalteten Gliedes (30) an das erste Rohr (3) anpreßbar ist.

7. Einrichtung nach einem der Patentansprüche 1 bis 6, dadurch gekennzeichnet, daß eine Rolle (27) als Sensor dient, dessen Achse (28) mit der Achse des ersten Rohres (3) parallel ist.

**Claims**

1. Appliance for the internal welding of a corner joint (25) of a pipe branch between a first straight pipe (3) and a second pipe (4), the cross-section of the first pipe (3) being less than the cross-section of the second pipe (4), with a mouthpiece carrier (16) which can be introduced into the first pipe and is axially displaceable by means of an actuating member (10, 11) and which, at its front end pushable into the second pipe, carries a gas mouthpiece (23) with a stick electrode (24) of low fusibility, forming an acute angle with the axis of the first pipe, and which is connected to a holder (5) of a stand (1) fastenable to the first pipet the holder together with the mouthpiece carrier being mounted in the stand so as to be rotatable about the axis of the first pipe (3) by means of a drive device, characterized in that the position of the tip of the electrode (24) relative to the inner or outer cylinder surface defined by the first pipe (3) can be adjusted at a fixed setting mechanically in the radial direction by means of a sensor (27) mounted on the mouthpiece carrier (16) and pressable against the wall of the first pipe, and for adjusting the position of the tip of the electrode (24) in the axial direction there are means (20) for generating a first electrical signal, corresponding to the actual distance, axial relative to the first pipe, between the tip of the electrode (24) and the welding location at the corner joint (25), and means (45) for generating a second electrical signal corresponding to a predetermined distance, the signals being fed to a comparator (42) serving for emitting an error signal which corresponds to the signal difference and which is fed to the actuating member (10, 11) for activation purposes, in order to displace the electrode (24) axially relative to the first pipe so as to reduce the error signal.

2. Appliance according to Patent Claim 1, characterized in that the sensor (27) can be pressed against a generatrix of the first pipe (3) which passes through the welding location.

3. Appliance according to Patent Claim 2, characterized in that the sensor (27) can be pressed against the inner wall of the first pipe (3).

4. Appliance according to Patent Claim 3, characterised in that the radial distance between the axis of the first pipe and the tip of the stick electrode (24) is at least equal to the distance between the said axis and the contact point of the sensor (27) or is longer than the last-mentioned distance by at most the amount of the wall thickness of the first pipe.

5. Appliance according to one of Patent Claims 1 to 4, characterised in that the first signal corresponds to the actual arc voltage between the electrode (24) and the welding location, and the second signal corresponds to a predetermined arc voltage.

6. Appliance according to one of Patent Claims 1 to 5, characterized in that the sensor (27) can be pressed against the first pipe (3) by means of a resilient member (30) inserted between the sensor (27) and holder (5).

7. Appliance according to one of Patent Claims 1 to 6, characterized in that a roller (27) serves as a sensor, of which the axis (28) is parallel to the axis of the first pipe (3).


**Revendications**

1. Dispositif de soudage interne d'un assemblage d'angle (25) d'un raccord de tuyaux entre un premier tuyau rectiligne (3) et un second tuyau (5), la section du premier tuyau (3) étant plus faible que la section du second tuyau (5), comprenant un support d'ajutage (16) pouvant être inséré dans le premier tuyau et déplacé axialement par un organe d'actionnement (10, 11) qui supporte à son extrémité avant qui peut être introduite dans le second tuyau un ajutage à gaz (23) comportant une électrode en baguette (24) difficilement fusible et formant avec l'axe du premier tuyau un angle aigu, et qui est relié à un porte-outil (5) d'une monture (1) pouvant être fixée au premier tuyau, le porte-outil ainsi que le support d'ajutage étant montés rotatifs dans la monture au moyen d'un dispositif d entraînement autour de l'axe du premier tuyau (3), caractérisé en ce que la position de la pointe de l'électrode (24) par rapport à la surface cylindrique interne et respectivement externe définie par le premier tuyau (3) peut être réglée de façon fixe et mécaniquement en direction radiale au moyen d'un capteur (27) monté sur le support d'ajutage (16) et pouvant être pressé contre la paroi du premier tuyau, et en ce que sont prévus pour le réglage de la position de la pointe de l'électrode (24) en direction axiale des moyens (20) pour émettre un premier signal électrique qui correspond à la distance axiale effective par rapport au premier tuyau entre la pointe de l'électrode (24) et la position de la soudure de l'assemblage d'angle (25), et des moyens (43) pour émettre un second signal électrique qui correspond à une distance prédéterminée, les signaux étant appliqué à un comparateur (42) servant à émettre un signal d'erreur correspondant à la différence entre les signaux, qui est appliqué à l'organe d'actionnement (10, 11) en vue de son activation, de manière à déplacer axialement l'électrode (24) par rapport au premier tuyau pour diminuer le signal d'erreur.

2. Dispositif selon la revendication 1, caractérisé en ce que le capteur (27) peut être pressé contre une génératrice du premier tuyau (3), qui passe par la position de soudure.

3. Dispositif selon la revendication 2, caractérisé en ce que le capteur (27) peut être pressé contre la paroi interne du premier tuyau (3).

4. Dispositif selon la revendication 3, caractérisé en ce que la distance radiale entre l'axe du premier tuyau et la pointe de l'électrode à baguette (24) est au moins aussi importante que la distance entre ledit axe et le point d'application du capteur (27), ou dépasse cette distance dernièrement mentionnée au maximum de l'importance de l'épaisseur de la paroi du premier tuyau.

5. Dispositif selon l'une des revendications 1 à 4, caractérisé en ce que le premier signal correspond à la tension effective de l'arc électrique entre l'électrode (24) et la position de soudure et le second signal correspond à une tension prédéterminée de l'arc électrique.

6. Dispositif selon l'une des revendications 1 à 5, caractérisé en ce que le capteur (27) peut être pressé contre le premier tuyau (3) au moyen d'un organe élastique (30) disposé entre le capteur (27) et le porte-outil (5).

7. Dispositif selon l'une quelconque des revendications 1 à 6, caractérisé en ce que l'on utilise en tant que capteur un rouleau (27) dont l'axe (28) est parallèle à l'axe du premier tuyau (3).

Fig.1

Fig.3

Fig. 2